# EUROPEAN PATENT APPLICATION

(11) **EP 1 878 348 A1**
(43) Date of publication of application: **16.01.2008**
(21) Application number: 06743425.8
(22) Date of filing: 07.04.2006
(51) Int. Cl.: A22C 11/00, A23L 1/317

(54) **METHOD OF PREPARING MEAT DERIVATIVES**

(30) Priority: 07.04.2005 ES 200500808
(71) Applicant: Navarretinto, S. L., 28109 LA MORALEJA (MADRID) (ES)
(72) Inventor: PEREIRA SANZ, Maria De La Soledad, 28109 LA MORALEJA-ALCOBENDAS (MADRID) (ES)
(74) Representative: Isern-Jara, Nuria
(86) International application number: PCT/ES2006/000165
(87) International publication number: WO 2006/106167

(57) **Abstract**

A process for the preparation of meat products, such as sausages of this present invention is **characterised** because it has the following stages: it has a starting product so as to shape it into an elongated shape, to cut a plurality of perpendicular or appreciably perpendicular sections, with a slight angle of inclinations compared to the central core (e) of the appreciably cylindrical product; and to stuff the plurality of unit sectioned portions (2) into a natural or synthetic wrapping (3), thus achieving individual portions with a natural or synthetic origin and achieving a single final product (4).

## Description

The object of this present invention patent is a process for the preparation of meat products that incorporates notable innovations and advantages in its presentation and conservation, enabling an easier and more rational use of same.

### BACKGROUND TO THE INVENTION

Nowadays, a significant part of the cured meat products are prepared in the form of sausages, such as pork loin, highly seasoned pork sausage, spiced sausage ("similar to salami"), blood sausage ("black pudding"), sausage ("Catalonian style"), etc., that are normally stuffed into natural sausage skins with differing shapes and sizes, in line with the uses and regions where they are produced or eaten.

On the other hand, certain types of cured meats, such as hams and shoulders made from pork, cured beef, dried cured tuna, etc., are normally kept in a shape that is more or less close to their natural states.

The meat products, equally if they are sausages or not, as and how they are currently prepared for sale, normally have some specific disadvantages related to their preservation and consumption. Some of the disadvantages that the current sales of the sausage products have are stated below:
1. One of the most frequent problems for the consumption of the above-mentioned products is the difficulty that the consumers have is the cutting of them in an appropriate manner, this process needing a certain skill and appropriate utensils.
2. Equally, when the consumption of a meat product, once having been started, is not finished in a specific time, there is the loss of texture, flavour and smell as a result of the accelerated drying out.
3. The purchase of whole pieces in the case of hams, shoulders, etc means an excessive immediate use for the user.
4. In some places, the presentation of certain meat products close to their natural shape brings about an undesirable visual appearance for the consumer that makes the sale of the products more difficult.

There is no knowledge at the present time of the existence of a similar sausage or meat product as at the present time these types of food products are presented in long units that always have to be cut afterwards.

### DESCRIPTION OF THE INVENTION

This present invention has been developed for the purpose of providing a process for the preparation of meat products that solves the previously stated disadvantages, in addition providing other additional advantages that will become clear from the description that is included below.

The process for the preparation of meat products, such as sausages of this present invention is characterised because it has the following stages:
a) It has a starting product so as to shape it into an elongated shape, for example, one that is noticeably cylindrical or prismatic;
b) To cut a plurality of perpendicular or appreciably perpendicular sections, with a slight angle of inclinations compared to the central core of the appreciably cylindrical product; and
c) To stuff the plurality of sectioned portions into a natural or synthetic wrapping, thus achieving an elongated product.

In this way, by means of the process being described, the sausages are presented in pieces that are internally perfectly cut, with the classical external appearance or format and with differing lengths, in line with the number of portions contained, allowing the amount of product required that will guarantee the freshness of same, making the cutting and distribution easier for consumption at any time and in any place. In addition, it avoids problems when storing or preserving the product in the homes of the consumers and solves the difficulty of the cutting that the majority of the consumers have, and in so doing preventing the consequent risk of cutting oneself.

With the process described the possibility of acquiring and consuming hams, shoulders, etc., is offered, with the same ease as with any other type of sausage without lessening their quality, in a simple and functional manner, and with the following advantages.
- The reticence due to the current presentation of hams, shoulders, etc.
- The purchase of the amount that the consumer or user really wants.
- An improvement in the current presentation and preservation of sliced products on trays or in plastic bags.
- The lack of problems when keeping the products at home.

Once the ham or similar product has been cured, or at the appropriate time during the process the boning of the ham or piece of meat is carried out, where appropriate, in such a way to obtain an optimisation in that the finer parts are divided in pieces that are appreciably prismatic, cylindrical, etc., with equal or differing lengths and sections. These pieces, either separated or equally in continuation one after the other and subjected to slicing or being cut into pieces and sub sequent sausage, give rise to the preparation of the product with a new format that is similar to that described for the sausages.

In accordance with another aspect of the invention, the process includes an additional step prior to stuffing that is the placing of separation elements between each cut piece or between each specific number of slices, elements that can be made of natural sausage skin, PVC, aluminium foil, there also being the possibility of the separation elements being edible, such as sheets of an aromatic plant.

The final product obtained from the process that is the object of this invention includes a plurality of cut portions and which are aligned within a wrapping in such a way as to make a single unit.

Other characteristics and advantages of the preparation process object of this present invention will become clear from a description of a preferred embodiment, but it is not exclusive, the drawings that are attached are by way of illustration but without being in any way limiting.

### A BRIEF DESCRIPTION OF THE DRAWINGS

Figure 1 is a perspective view of a final product obtained by using the process that is the object of this invention; and
Figure 2 is a lateral section view of a piece of the final product obtained.

### DESCRIPTION OF A PREFERRED EMBODIMENT

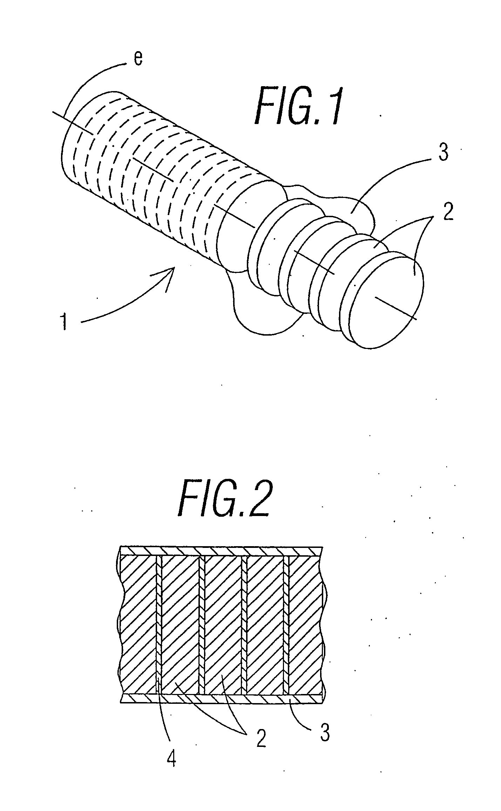

The process for the preparation of meat products, such as hams, cured loins of pork, seasoned pork sausages, spicy sausages that is the object of this present invention allows a final product (1) to be obtained in which there is an elongated body, with a variable length, in line with the type of consumer, has an appreciably cylindrical or prismatic shape (depending on the type of meat product), this shape not being by way of limitation, which includes a plurality of cut portions (2) lined up with each other, all of these being arranged inside of a wrapping (3), as and how shown in Figure 1.

It must be highlighted that in figure 1 there is a section of product (1) shown with an open outer wrapping (3) to make it easier to understand, and the portions (2) arranged on the inside of the wrapping (3) with broken lines.

The process of this present invention consists of a series of stages that are described below in greater detail. In the first place there is a sausage meat product, cured or not, that is given an appreciably elongated cylindrical shape.

Next, a plurality of portions are cut using a flat, wavy, irregular and random cut, in perpendicular sections or alternatively appreciably perpendicular that can have a slightly inclined angle compared to the centre core (e) of the noticeably cylindrical product, resulting in unit portions (2), with a specific width and then the plurality of sectioned unit portions (2) are stuffed into a wrapping (3) that can be natural or synthetic giving a single elongated product that is easy to store and transport for the user.

The sausage type product being described here can include separation elements (4) located between each cut portion (2), as and how shown in figure 2, formed by wafer thin layers of natural sausage skin, PVC, aluminium foil, etc., that can be used as elements for traceability or identification.

It is not considered necessary to expand on the contents of the description as an expert in the subject matter can understand the aims and advantages derived from the invention, likewise to develop and bring the aim of same into practical use.

The details, shapes, sizes and other accessorial elements, likewise the materials used in the manufacture of the process for the preparation of meat products of the invention can be appropriately substituted by others that are technically equivalent and do not stray away from the essentiality of the invention or the scope defined by the claims that are included below.

## Claims

1. A process for the preparation of meat products, such as sausages, **characterised by** the following stages:
a) to provide a starting product so as to shape it into an elongated shape,;
b) to severe multiple portions into perpendicular or appreciably perpendicular sections, with a slight angle of inclination compared to the central core (e) of the appreciably cylindrical product; and
c) stuff the plurality of unit sectioned portions (2) into a natural or synthetic wrapping (3), thus achieving an elongated product (4).

2. A process for the preparation of meat products, according to Claim 1, **characterised in that** it has an additional step prior to the stuffing that consists of placing separation elements (4) between the cut portions (2).

3. A process for the preparation of meat products, according to Claim 1, **characterised in that** the final product (1) achieved has a plurality of cut portions (2) that are lined up with each other, these being put into a wrapping (3).
